# FASCICULE DE BREVET EUROPEEN

(11) **EP 3 740 080 B1**
(45) Date de publication et mention de la délivrance du brevet: **15.07.2026**
(21) Numéro de dépôt: 19702012.6
(22) Date de dépôt: 15.01.2019
(51) Int. Cl.: A23C 9/137, A23C 19/076

(54) **METHODE DE FABRICATION DE PRODUITS ALIMENTAIRES A PARTIR DE YAOURT**
VERFAHREN ZUR HERSTELLUNG VON LEBENSMITTELPRODUKTEN AUS JOGHURT
METHOD FOR PRODUCING FOOD PRODUCTS FROM YOGHURT

(30) Priorité: 19.01.2018 FR 1850454
(43) Date de publication de la demande: 25.11.2020
(73) Titulaire: Radev, Zhivko, 1233 Sofia (BG)
(72) Inventeur: Radev, Zhivko, 1233 Sofia (BG)
(74) Mandataire: Cabinet Boettcher
(86) Numéro de dépôt international: PCT/EP2019/050977
(87) Numéro de publication internationale: WO 2019/141692

(56) Documents cités:
- CN-A- 101 068 471
- CN-A- 106 376 646
- SUK SHIN KIM ET AL: "Survival of Lactic acid Bacteria during Microwave Vacuum-drying of Plain Yoghurt", LWT- FOOD SCIENCE AND TECHNOLOGY, ACADEMIC PRESS, UNITED KINGDOM, vol. 30, no. 6, 1 September 1997 (1997-09-01), pages 573 - 577, XP008139184, ISSN: 0023-6438, [retrieved on 20020418], DOI: 10.1006/FSTL.1996.0230
- BRIAN BLUE: "Easy Cheese - making Cheese from Yogurt", YOUTUBE, 19 September 2014 (2014-09-19), pages 1 pp., XP054978680, Retrieved from the Internet <URL:https://www.youtube.com/watch?v=7HZlV8hS55I> [retrieved on 20180912]
- ANONYMOUS: "Is it safe to microwave yogurt? - Quora", 22 July 2016 (2016-07-22), XP055506621, Retrieved from the Internet <URL:https://www.quora.com/Is-it-safe-to-microwave-yogurt> [retrieved on 20180912]
- ANONYMOUS: "How to Make Yogurt Cheese | Stonyfield", 4 September 2013 (2013-09-04), XP055506623, Retrieved from the Internet <URL:https://www.stonyfield.com/blog/yogurt-cheese> [retrieved on 20180912]
- ANONYMOUS: "Greek Yogurt Cheese - Taste Love and Nourish", 31 July 2013 (2013-07-31), XP055506625, Retrieved from the Internet <URL:http://www.tasteloveandnourish.com/2013/07/31/greek-yogurt-cheese/> [retrieved on 20180912]
- ANONYMOUS: "How to Make Whey & Yogurt Cheese (Frugal, Healthy Cream Cheese Substitute!)", 1 January 2009 (2009-01-01), XP055506639, Retrieved from the Internet <URL:https://www.kitchenstewardship.com/how-to-make-whey-yogurt-cheese/> [retrieved on 20180912]

## Description

La présente invention concerne une méthode de fabrication de produits alimentaires à partir de yaourt. L'invention est définie par les revendications 1-6 attachées.

### ARRIERE PLAN DE L'INVENTION

Le yaourt, appelé aussi yogourt, provient d'une fermentation lactique du lait réalisée à l'aide de bactéries lactiques appelées Lactobacillus bulgaricus et Streptococcus thermophilus. La fermentation lactique conduit à une prise en masse du lait et permet d'obtenir la texture et la saveur caractéristique du yaourt.

Il existe, sur le marché, une grande variété de yaourts qui peuvent être classés suivant leur consistance (yaourt à boire, crémeux, compact, ...) ou leur saveur (yaourt au goût lactique naturel, aux fruits, aux chocolats, ...). De par sa nature, le yaourt est une denrée périssable qui peut être consommée au maximum jusqu'à une trentaine de jours après sa fabrication, à condition qu'il soit conservé dans un milieu réfrigéré.

Bon nombre de produits alimentaires sont fabriqués à base de yaourt et sont de consistances variées. Le Tzatziki est par exemple un savant mélange de yaourt épais et de concombres râpés qui peut être servi comme sauce ou comme entrée. A l'inverse, le Lebanon est un plat composé de boules de yaourt égoutté en saumure. Bien que conservés en milieu réfrigéré, la plupart de ces produits alimentaires ont une durée de conservation n'excédant pas quelques jours.

On connait des documents WO2010124224 et WO2014170716 des produits alimentaires fabriqués à base de yaourt qui ont une durée de conservation plus longue. Tous ont cependant une consistance crémeuse avec des teneurs limitées en matière sèche et pH. Leur diversité en consistance et en saveur s'avère donc très limitée. CN101068471 décrit la fabrication d'un fromage crémeux impliquant un chauffage micro-onde.

### OBJET DE L'INVENTION

L'invention a pour objet de proposer une méthode de fabrication de produits alimentaires à base de yaourt présentant une large gamme de consistance et ayant une longue durée de conservation dans des conditions normales de température ou en milieu réfrigéré.

### RESUME DE L'INVENTION

En vue de la réalisation de cet objet, l'invention propose une méthode de fabrication de produits alimentaires à partir d'un yaourt, ledit yaourt comprenant un coagulum de consistance ferme, un taux de lipide sensiblement égal à 2%, un taux de protéine compris entre 3,2 et 3,3%, un taux de matière sèche compris entre 9,5 et 10% et un niveau de pH compris entre 4 et 4,8. La méthode comprend les étapes suivantes :
- a) chauffer le yaourt sous micro-ondes à une fréquence comprise entre 915 et 2375 mégahertz et à une température comprise entre 60 et 65 degrés Celsius pendant 10 à 15 secondes,
- b) égoutter le yaourt chauffé par micro-ondes pendant une durée comprise entre 12 et 18 heures et à une température comprise entre 2 et 6°C,
- c) presser le yaourt égoutté pendant une durée comprise entre 12 et 18 heures et à une température comprise entre 2 et 6°C,
- d) ajouter au yaourt pressé au moins un ingrédient comprenant un extrait aqueux de condiments à effets conservateurs et de la pectine soluble dans l'extrait aqueux de condiments à effets conservateurs, le rapport volume de pectine sur volume d'extrait aqueux étant sensiblement égal à 0.1.

La méthode comprend aussi au moins l'une des deux étapes suivantes :
- e) chauffer le yaourt pressé et additionné à une température comprise entre 65 et 70 degrés Celsius jusqu'à l'obtention d'une teneur en matière sèche sensiblement supérieure à 30%, puis à une température comprise entre 79 et 81 degrés Celsius pendant 88 à 92 secondes pour ensuite revenir à une température comprise entre 65 et 70 degrés Celsius jusqu'à l'obtention d'un produit donné ayant une teneur en matière sèche comprise entre 30% et 44.5%,
- f) chauffer le yaourt pressé et additionné à une température comprise entre 90 et 95 degrés Celsius pendant 30 à 40 minutes et le refroidir jusqu'à entre 9 et 11 degrés Celsius en moins de 60 minutes.

La méthode comprend en outre l'étape suivante :
- g) corriger le niveau de pH du yaourt pressé et additionné par ajout de bicarbonate de sodium et/ou de bicarbonate de potassium pour obtenir un niveau de pH supérieur à 5, et en particulier compris entre 5 et 5,8, cette correction ayant lieu au cours de l'étape e) ou avant l'étape f) lorsque l'étape e) n'a pas lieu.

De manière surprenante, l'ensemble de ces étapes permet d'obtenir une matière donnant accès à une large gamme de produits alimentaires avec des consistances variées et une longue durée de conservation.

L'inventeur a ainsi pu fabriquer des produits crémeux, à tartiner, ferme, croquant, en poudre, râpé ... dont les durées de conservation sont d'au moins 6 mois.

La pectine est dissoute dans un extrait aqueux de condiment(s) à effet conservateur avec un rapport volume de pectine sur volume d'extrait aqueux sensiblement égal à 0,1. L'ingrédient formé de l'extrait aqueux de condiment(s) dans lequel est dissoute la pectine est notamment un ingrédient stabilisant.

L'ingrédient formé de l'extrait aqueux de condiment(s) dans lequel est dissoute la pectine agit notamment tel un hydro-colloïde. Grâce à ses fibres végétales solubles, la pectine fournit en effet audit ingrédient des propriétés très intéressantes comme des propriétés d'émulsifiant, de stabilisateur et de prébiotique.

De manière particulière, la méthode de fabrication comprend une étape d'ajout d'ingrédients d'origine animale ou végétale.

De manière particulière, la méthode de fabrication comprend une étape d'ajout de probiotiques.

De manière particulière, la méthode de fabrication comprend une première étape de maturation du produit issu de l'étape f) à une température comprise entre 2 et 6 degrés Celsius pendant une durée comprise entre 24 et 48 heures, une étape d'application sur le produit maturé d'une couche protectrice contre la contamination superficielle, puis une deuxième étape de maturation du produit recouvert de sa couche protectrice à une température comprise entre 2 et 6 degrés Celsius pendant 1 à 3 mois.

De manière particulière, la méthode de fabrication comprend une étape de râpage ou de réduction en poudre du produit maturé pour obtenir un produit râpé ou réduit en poudre.

De manière particulière, la méthode de fabrication comprend une étape de chauffage du produit râpé ou réduit en poudre à une température comprise entre 65 et 70 degrés Celsius pendant 20 à 30 minutes.

### BREVE DESCRIPTION DES FIGURES

L'invention sera mieux comprise à la lumière de la description qui suit, laquelle est purement illustrative et non limitative, et doit être lue en regard des figures annexées parmi lesquelles :
- la figure 1 représente schématiquement un premier mode de réalisation de l'invention dans lequel le produit alimentaire a une consistance épaisse et une durée de conservation comprise entre 6 et 24 mois dans des conditions normales de température;
- la figure 2 représente schématiquement un deuxième mode de réalisation de l'invention dans lequel le produit alimentaire a une consistance crémeuse ou à tartiner, et une durée de conservation comprise entre 6 et 24 mois dans des conditions normales de température;
- la figure 3 représente schématiquement un troisième mode de réalisation de l'invention dans lequel le produit alimentaire a une consistance ferme et une durée de conservation comprise entre 6 et 12 mois dans des conditions réfrigérées;
- la figure 4 représente schématiquement un quatrième mode de réalisation de l'invention dans lequel le produit alimentaire est croquant et a une durée de conservation comprise entre 6 et 12 mois dans des conditions réfrigérées;
- la figure 5 représente schématiquement un cinquième mode de réalisation de l'invention dans lequel le produit alimentaire se présente sous forme de poudre et a une durée de conservation comprise entre 6 et 12 mois dans des conditions réfrigérées.

### DESCRIPTION DETAILLEE DE L'INVENTION

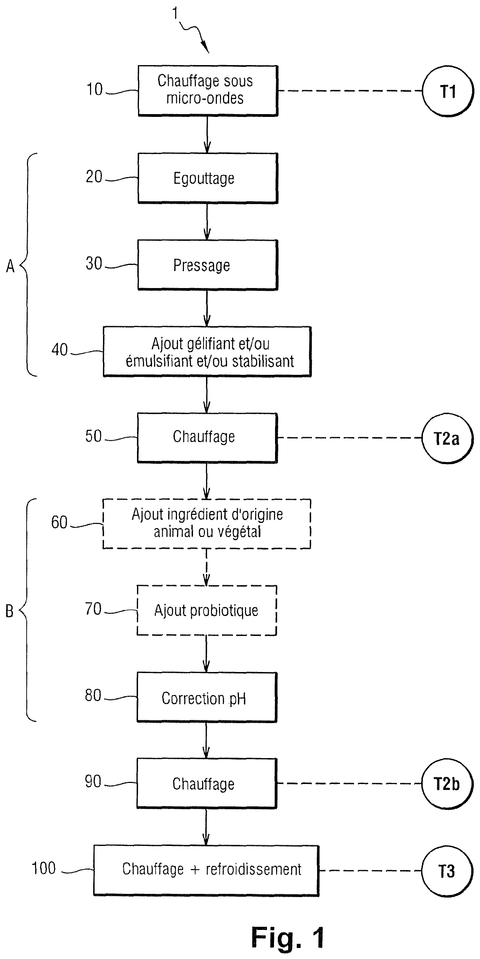

En référence à la figure 1 et selon un premier mode de réalisation de l'invention, une méthode de fabrication 1 concerne la fabrication d'un produit alimentaire à partir d'un yaourt Y, le produit alimentaire ayant une consistance épaisse et une durée de conservation comprise entre 6 et 24 mois dans des conditions normales de température (c'est-à-dire dans des conditions non réfrigérées, le produit alimentaire étant ainsi soumis à la température ambiante). Plus particulièrement, le produit alimentaire se présente sous la forme d'un bloc homogène et/ou à la surface lisse au découpage.

La fabrication d'un yaourt étant bien connue de l'art antérieur elle ne sera pas détaillée ici. A titre d'exemple le yaourt Y servant de produit de base à la méthode de fabrication 1 comprend notamment les étapes successives suivantes :
- réception et purification d'un lait,
- pasteurisation du lait purifié à une température comprise entre 82 et 85°C (degrés Celsius),
- homogénéisation du lait pasteurisé à 70°C et à une pression comprise entre 10 et 12 MPa (MégaPascal),
- refroidissement du lait homogénéisé jusqu'à une température comprise entre 40 et 45°C,
- ajout de bactéries Lactobacillus bulgaricus et Streptococcus thermophilus, le rapport volume de Lactobacillus bulgaricus sur volume de Streptococcus thermophilus étant compris entre 0.25 et 0.50 et le rapport volume de l'ensemble des bactéries sur volume du lait refroidi étant compris entre 0.01 et 0.02,
- brassage du lait ensemencé puis repos pendant une durée comprise entre 20 et 30 minutes,
- remplissage en conditionnements compris entre 500 et 5000 grammes du lait brassé (optionnellement entre 500 et 3000 grammes et optionnellement encore entre 500 et 1000 grammes),
- fermentation du lait conditionné pendant une durée comprise entre 3 et 4 heures à une température comprise entre 40 et 45°C,
- refroidissement du lait fermenté pendant une durée comprise entre 2 et 3 heures jusqu'à une température de 20°C, puis pendant une durée de 4 heures jusqu'à une température de 10°C,
- entreposage du lait refroidi à une température comprise entre 0 et 6°C pendant moins de 5 jours.

Le yaourt Y ainsi obtenu comprend un coagulum de consistance ferme, le yaourt Y comportant un taux de lipide sensiblement égal à 2%, un taux de protéine compris entre 3,2 et 3,3%, un taux de matière sèche compris entre 9,5 et 10% et un pH (potentiel hydrogène) compris entre 4 et 4,8.

La méthode de fabrication 1 part donc d'un produit de base cuit. On part d'ailleurs d'un yaourt ferme (et non brassé par exemple).

Conformément à la figure 1, la méthode de fabrication 1 comprend une première étape 10 consistant à chauffer le yaourt Y sous micro-ondes à une fréquence comprise entre 915 et 2375 MHz et à une température comprise entre 60°C et 65°C pendant 10 à 15 secondes, pour réaliser un premier traitement thermique T1 du yaourt Y. Le chauffage sous micro-ondes a notamment pour effet d'engendrer la formation de petit lait, appelé aussi sérum lactique ou lactosérum, qui ressort du coagulum chauffé.

Contrairement aux autres méthodes de chauffage basées sur la transmission de la chaleur, le chauffage sous micro-ondes permet un chauffage relativement uniforme et rapide du yaourt Y.

D'une part ceci permet d'améliorer le rendement. D'autre part ceci permet également une dénaturation limitée des protéines contenues dans le coagulum. En outre on assure ainsi une absence de moisissures et de levures dans le yaourt.

La première étape 10 peut être réalisée dans un tunnel de chauffage à action continue ou dans une chambre à action discontinue.

Une fois la première étape terminée, lors d'une deuxième étape 20, le yaourt qui a été chauffé sous micro-ondes est égoutté pendant une durée comprise entre 12 et 18 heures et à une température comprise entre 2 et 6°C. L'égouttage permet de séparer la partie compacte du yaourt appelée coagulum de la partie liquide appelée petit lait ou sérum lactique. Cette séparation est réalisée par exemple en utilisant un égouttoir à cylindre ou une toile d'égouttage.

De façon avantageuse, au cours de cette étape, le yaourt subit de par son poids un auto-compactage jusqu'à ce que le yaourt atteigne une teneur en matière sèche comprise entre 19 et 19,5% et un taux de pH compris entre 3,8 et 3,95. Au terme de la deuxième étape 20, le rapport volume de sérum lactique sur volume de coagulum est sensiblement égal à 2.

Une fois la deuxième étape terminée, une troisième étape 30 consiste à presser le yaourt qui a été égoutté pendant une durée comprise entre 8 et 12 heures et à une température de nouveau comprise entre 2 et 6°C. Cette troisième étape 30 peut par exemple être réalisée par une presse à laiterie.

Le pressage du yaourt égoutté permet d'augmenter la teneur en matière sèche du yaourt égoutté.

Au cours de cette troisième étape il est ainsi encore possible d'extraire du yaourt qui a été égoutté jusqu'à 22 à 25% de sérum lactique supplémentaire.

Pendant le pressage, des micro-organismes lactiques continuent de décomposer le sucre du yaourt (appelé aussi lactose) pour le réduire en acide lactique. La troisième étape 30 a ainsi pour effet d'augmenter la teneur en matière sèche et de diminuer le taux de pH qui sont désormais respectivement compris entre 24 et 25% et entre 3,6 et 3,8.

Une fois achevée la troisième étape 30, lors d'une quatrième étape 40, on ajoute au yaourt qui a été pressé :
- un ingrédient qui est un extrait aqueux de condiments à effets conservateurs (curcuma et/ou moutarde et/ou poivre de Jamaïque et/ou clou de girofle et/ou thym et/ou romarin et/ou sauge, ...), et
- un ingrédient qui est ici de la pectine soluble dans l'extrait aqueux de condiments à effets conservateurs, le rapport volume de pectine sur volume d'extrait aqueux étant ici sensiblement égal à 0.1.

Cet extrait aqueux comprenant la pectine se présente sous forme de gel.

Le rapport volume d'extrait aqueux contenant la pectine sur volume de yaourt est typiquement compris entre 10 et 20%.

L'extrait aqueux et la pectine soluble ont ainsi pour effet d'augmenter la durée de vie du produit alimentaire par leurs actions antibactériennes et bactériostatiques et de stabiliser le goût du produit alimentaire.

Par ailleurs, la pectine, en tant qu'émulsifiant et hydro-colloïde, empêche la synérèse et la dénaturation des protéines lors de traitements thermiques ultérieurs.

Une fois la quatrième étape 40 réalisé, on procède à une homogénéisation et à un deuxième traitement thermique T2 du yaourt additionné. De préférence, l'utilisation d'un mixer pourvu de moyens de chauffage permet de réaliser simultanément cette homogénéisation et ce deuxième traitement thermique T2.

Une première phase T2a du deuxième traitement thermique T2 consiste à chauffer, lors d'une cinquième étape 50, le yaourt additionné à une température comprise entre 65 et 70°C jusqu'à ce qu'à l'obtention d'une teneur en matière sèche du yaourt additionné sensiblement supérieure à 30%.

Au terme de la cinquième étape 50, des ingrédients supplémentaires d'origine animale (œufs, viandes, ...) ou végétale (fruits, légumes, ...) peuvent être ajoutés au cours d'une sixième étape 60 optionnelle. Différentes variétés de saveurs peuvent ainsi être données au produit alimentaire.

De la même façon, un ou des probiotiques, notamment aux effets bénéfiques pour la digestion, peuvent aussi être ajoutés lors d'une septième étape 70 optionnelle.

Une fois les étapes 50, 60 et 70 achevées, une huitième étape 80 est mise en œuvre. Elle consiste à mesurer puis corriger le pH du yaourt ainsi transformé par les sept étapes supérieures par l'ajout de bicarbonate de sodium et de potassium dans le yaourt pour obtenir un taux supérieur à 4,9, et plus particulièrement comprise entre 5 et 5,8.

Une fois la huitième étape 80 terminée, au cours d'une neuvième étape 90, on réalise une deuxième phase T2b du deuxième traitement thermique T2 qui consiste à chauffer le yaourt à une température de 80°C pendant 90 secondes puis à une température comprise entre 65 et 70°C jusqu'à l'obtention d'un produit ayant une teneur en matière sèche comprise entre 30 et 44,5%. Le produit obtenu est alors mou et ferme, soit facile à former.

Le deuxième traitement thermique T2 permet notamment de remplacer la pasteurisation et d'interrompre le processus de fermentation lactique en désactivant les enzymes.

Le produit est ensuite conditionné en doses unitaires dans des paquetages fermant hermétiquement, comme par exemple des récipients en verre muni de couvercles dits à couple contrôlé (plus connu sous le nom anglais de couvercles « twist-off »). Le conditionnement en dose unitaire peut être réalisé sur une ligne de production de manière continue ou discontinue.

Le produit conditionné connait alors un troisième traitement thermique T3 lors d'une dixième étape 100 pour réaliser une cuisson suivie d'un refroidissement du produit conditionné. La cuisson consiste à chauffer le produit conditionné dans l'eau ou à la vapeur à une température comprise entre 90 et 95°C pendant une durée comprise entre 30 et 40 minutes. La cuisson peut être réalisée dans une chambre de chauffage à action discontinue ou dans un tunnel de chauffage à action continue. Le produit cuit est ensuite refroidi jusqu'à une température sensiblement égale à 10°C en moins de 60 minutes. Le refroidissement peut être réalisé à l'aide d'une chambre de refroidissement à action discontinue ou dans un tunnel de refroidissement à action continue.

Comparativement à la stérilisation autoclave (plus connue sous le nom anglais de stérilisation « retort ») ou à la stérilisation UHT (pour Upérisation Haute Température) qui s'effectuent à des températures supérieures à 100°C, la cuisson du traitement thermique T3 permet notamment de préserver les qualités nutritives du produit, et de garantir une pureté microbiologique et une longue durée de vie du produit.

Dès lors, le produit obtenu au terme du troisième traitement thermique T3 constitue le produit alimentaire issu de la méthode de fabrication 1 qui, s'il est entreposé dans des conditions normales de température, peut être conservé pendant une durée variant de 6 à 24 mois. La teneur en matière sèche, en protéine et le taux en pH du produit alimentaire sont respectivement compris entre 30 et 44,5%, entre 10 et 21% et entre 5 et 5,8.

Le tableau ci-dessous donne des exemples de produits alimentaires obtenus par la mise en œuvre de la méthode de fabrication 1 :

| Type d'essai | Résultat Produit RN6204 | Résultat Produit RN6206 | Résultat Produit RN6207 | Résultat Produit RN6208 |
|---|---|---|---|---|
| Teneur en matière sèche (%) | 43,94 | 33 | 36,19 | 44,33 |
| PH | 5,23 | 5,76 | 5,32 | 5,36 |
| Consistance | Produit compact | Produit compact | Compacte, homogène avec des morceaux de paprika rouge | Homogènes avec des morceaux de jambon |
| Goût | Lactique assaisonné de curcuma | Lactique au goût d'olives | Lactique au goût d'œufs et relevé de paprika rouge grillé | Lactique au goût de jambon |
| Arôme | Lactique à l'arôme de curcuma | Lactique à l'arôme d'olives | Arôme lactique | Lactique |
| Couleur | Jaune clair | Pâte d'olives noires | Jaune avec des morceaux et brins rouges | Blanc laiteux avec morceaux de jambon |
| Aspect extérieur | Bloc homogène à la surface lisse au découpage | Bloc homogène | Surface lisse au découpage | Surface lisse au découpage |
| Teneur en protéines (%) | 19,81 | 10,31 | 15,02 | 20,35 |

La longue durée de conservation d'un produit alimentaire fabriqué par la méthode selon l'une des mises en œuvre de l'invention peut être vérifiée en effectuant des analyses microbiologiques dudit produit. Le tableau ci-dessous donne des résultats d'analyses pour les exemples des produits alimentaires obtenus par la mise en œuvre de la méthode de fabrication 1 :

| Paramètres microbiologiques (matière sèche 30-44,5%, PH 5-5,8, protéines 10-21%) | | | |
|---|---|---|---|
| RN 6204 : Produit alimentaire de yaourt cuit avec extrait aqueux de curcuma | | | |
| RN6206 : Produit alimentaire avec pâté d'olives noires et extrait aqueux de moutarde | | | |
| RN 6207 : Produit alimentaire de yaourt cuit et du paprika grillé avec extrait aqueux de moutarde | | | |
| RN 6208 : Produit alimentaire de yaourt cuit et jambon avec extrait aqueux de clou de girofle et piment de Jamaïque | | | |

| Type de caractéristique testée | Unité de mesure | Résultat | Conditions du test |
|---|---|---|---|
| Salmonelle | ufc/25g | Non détectable | 37.0 +/-0.1°C |
| Moisissures et levures | ufc/g | <10 | 25.0 +/-0.1°C Thermostatés 14 jours à 37°C |
| Spores de microorganismes mésophiles anaérobiques et microorganismes anaérobiques facultatifs | ufc/g | <10 | 37.0 +/-0.1°C Thermostatés 14 jours à 37°C |
| Coliformes | ufc/g | <1x10^1 | 37.0 +/-0.1°C |
| Staphylocoques à coagulase positive | ufc/g | <1x10^2 | 37.0 +/-0.1°C |
| Microorganismes mésophiles aérobiques et anaérobiques facultatifs | - | Non détectable dans 1 gr. | 37.0 +/-0.1°C Thermostatés 14 jours à 37°C |
| Microorganismes mésophiles anaérobiques | - | Non détectable dans 1 gr. | 37.0 +/-0.1°C Thermostatés 14 jours à 37°C |

*On rappelle ici que l'acronyme ufc signifie « unité formant colonie » (plus connu sous l'acronyme anglais « cfu » pour « colony-forming unit »).*

Dans le but de simplifier la suite de la description du premier mode de réalisation de l'invention, la deuxième étape 20, la troisième étape 30 et la quatrième étape 40 du premier mode de réalisation constituent un premier enchainement d'étapes A pouvant être résumé de la façon suivante :
- égouttage du yaourt chauffé (étape 20),
- pressage du yaourt égoutté (étape 30),
- ajout d'un gélifiant et/ou d'un émulsifiant et/ou d'un stabilisant au yaourt pressé (étape 40).

De la même façon, la sixième étape 60, la septième étape 70 et la huitième étape 80 constituent un deuxième enchainement d'étapes B pouvant être résumé de la façon suivante :
- ajout optionnel d'ingrédient supplémentaire d'origine animale ou végétale (étape 60),
- ajout optionnel de probiotiques (étape 70),
- correction du pH (étape 80).

Comme illustré à la figure 1, la méthode de fabrication 1 peut alors être schématisée de la manière suivant :
- traitement thermique T1
- premier enchainement d'étapes A
- première phase T2a du traitement thermique T2
- deuxième enchainement d'étapes B
- deuxième phase T2b du traitement thermique T2
- traitement thermique T3

Selon un deuxième mode de réalisation de l'invention, une méthode de fabrication 2 concerne la fabrication d'un produit alimentaire à partir d'un yaourt Y, le produit alimentaire ayant une consistance crémeuse ou à tartiner, et une durée de conservation comprise entre 6 et 24 mois dans des conditions normales de température (c'est-à-dire dans des conditions non réfrigérées, le produit alimentaire étant ainsi soumis à la température ambiante). Le yaourt Y est par exemple le même que celui du premier mode de réalisation.

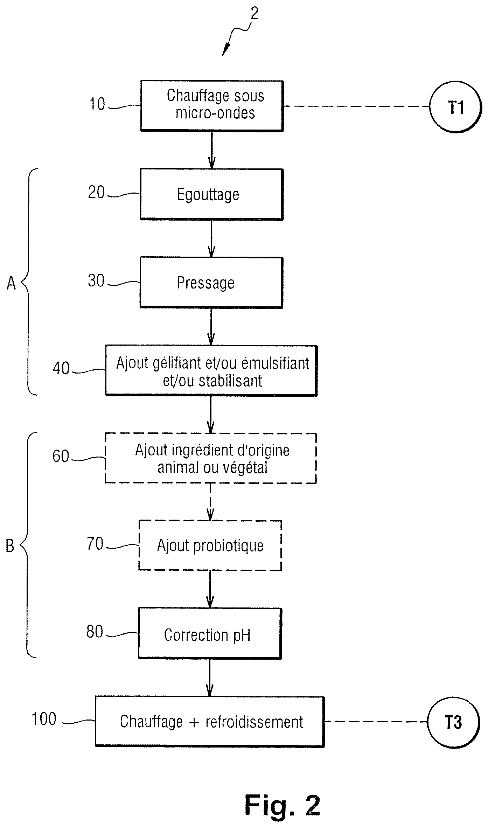

Conformément à la figure 2, la méthode de fabrication 2 est similaire à la méthode 1 à la différence que le deuxième traitement thermique T2 n'est pas réalisé. Seuls le premier traitement thermique T1 et le troisième traitement thermique T3 sont réalisés. Dès lors, la méthode de fabrication 2 peut être schématisée de la façon suivante :
- traitement thermique T1
- premier enchainement d'étapes A
- deuxième enchainement d'étapes B
- traitement thermique T3

La méthode de fabrication 2 peut également comprendre une étape d'homogénéisation.

Au terme du troisième traitement thermique T3, le produit refroidi forme le produit alimentaire issu de la méthode de fabrication 2 qui, s'il est entreposé dans des conditions normales de température, peut être conservée pendant une durée variant de 6 à 24 mois. La teneur en matière sèche du produit alimentaire est alors comprise entre 18 et 33% et le taux en pH compris entre 4 et 5,65.

Le tableau ci-dessous donne des exemples de produits alimentaires obtenus par la mise en œuvre de la méthode de fabrication 2 :

| T Type d'essai | Résultat PN4007 | Résultat PN4008 | Résultat RN6764 | Résultat RN6765 |
|---|---|---|---|---|
| Teneur en matière sèche (%) | 19,52 | 18,39 | 18,82 | 32,63 |
| PH | 4,49 | 4,22 | 5,63 | 5,17 |
| Consistance | Consistance pâteuse à tartiner | Homogène avec morceaux de paprika rouge grillé 1-2 mm | Produit à la surface lisse, homogène | Crémeuse |
| Goût | Lactique mixte | Lactique au goût d'œufs et relevé de paprika rouge grillé | Lactique, légèrement salé au goût de tournesol, thym et romarin | Goût doux de cacao mélangé à celui de la noix de coco |
| Arôme | Lactique mixte avec arôme d'olives | | Lactique avec arôme de tournesol, thym et romarin | Lactique de cacao mélangé à l'arôme de noix de coco |
| Couleur | Marron clair couleur de la pâte d'olives | Jaune clair avec morceau rouges et brins vert foncé | Gris clair | Cacao foncé avec des points de noix de coco |
| Aspect extérieur | | | A découper, à tartiner, gris clair à surface lisse | |
| Teneur en protéines (%) | | | 3,35 | 1,47 |

La longue durée de conservation d'un produit alimentaire fabriqué par la méthode selon l'une des mises en œuvre de l'invention peut être vérifiée en effectuant des analyses microbiologiques dudit produit. Le tableau ci-dessous donne des résultats d'analyses pour les exemples des produits alimentaires obtenus par la mise en œuvre de la méthode de fabrication 2 :

| Paramètres microbiologiques (matière sèche 18-33%, PH 4-5.65) | | | |
|---|---|---|---|
| PN 4007 : Produit alimentaire de yaourt cuit avec pâté d'olives et extrait aqueux de moutarde | | | |
| RN 6764 : Produit alimentaire de sérum lactique de yaourt cuit, graines de tournesol et extrait aqueux de thym et romarin | | | |
| RN6765 : Produit alimentaire de sérum lactique de yaourt cuit, râpures de noix de coco, farine de caroube et extrait aqueux de sauge | | | |

| Type de caractéristique testée | Unité de mesure | Résultat | Conditions du test |
|---|---|---|---|
| Salmonelle | ufc/25g | Non détectable | 37.0 +/-0.1°C |
| Moisissures et levures | ufc/g | <10 | 25.0 +/-0.1°C |
| Spores de microorganismes mésophiles anaérobiques et microorganismes anaérobiques facultatifs | ufc/g | <10 | 37.0 +/-0.1°C Thermostatés 14 jours à 37°C |
| Coliformes | ufc/g | <1x10^1 | 37.0 +/-0.1°C |
| Staphylocoques à coagulase positive | ufc/g | <1x10^2 | 37.0 +/-0.1°C |
| Microorganismes mésophiles aérobiques et anaérobiques facultatifs | - | Non détectable dans 1 gr. | 37.0 +/-0.1°C Thermostatés 14 jours à 37°C |
| Microorganismes mésophiles anaérobiques | - | Non détectable dans 1 gr. | 37.0 +/-0.1°C Thermostatés 14 jours à 37°C |

Selon un troisième mode de réalisation de l'invention, une méthode de fabrication 3 concerne la fabrication d'un produit alimentaire à partir d'un yaourt, le produit alimentaire ayant une consistance ferme et une durée de conservation comprise entre 6 et 12 mois dans des conditions réfrigérées. Le yaourt Y est par exemple le même que celui du premier mode de réalisation.

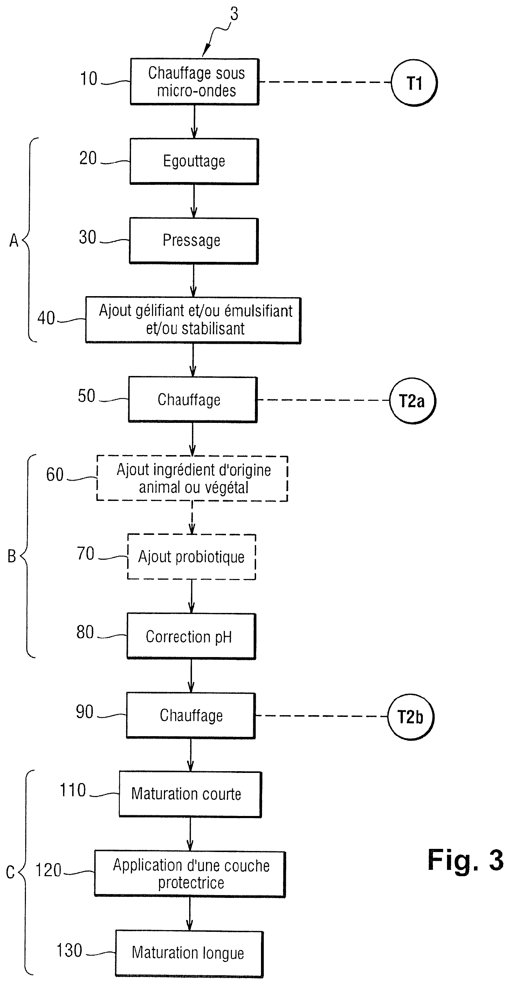

Conformément à la figure 3, la méthode de fabrication 3 est sensiblement similaire à la méthode 1 à la différence que le troisième traitement thermique T3 est remplacé par un troisième enchainement d'étapes C. Seuls le premier traitement thermique T1 et le deuxième traitement thermique T2 sont réalisés. Dès lors, la méthode de fabrication 3 peut être schématisée de la façon suivante :
- traitement thermique T1
- premier enchainement d'étapes A
- première phase T2a du traitement thermique T2
- deuxième enchainement d'étapes B
- deuxième phase T2b du traitement thermique T2
- troisième enchainement d'étapes C

La deuxième phase T2b du traitement thermique T2 est ici mise en œuvre de sorte à obtenir un produit ayant une teneur en matière sèche comprise entre 40 et 42%.

Le produit est alors conditionné dans des moules pour être entreposé, lors d'une onzième étape 110, à une température comprise entre 2 et 6°C pendant une durée comprise entre 24 et 48 heures. Pendant cette courte maturation, le produit subit un auto-compactage et voit sa teneur en matière sèche sensiblement augmenter.

Au terme de la onzième étape 110, le produit maturé est démoulé pour subir l'application d'une couche superficielle protectrice formant une douzième étape 120. La couche protectrice permet d'empêcher la contamination superficielle du produit en utilisant par exemple de l'huile de noix de coco.

Le produit protégé est alors de nouveau entreposé, lors d'une treizième étape 130, à une température comprise entre 2 et 6°C pendant une durée comprise entre 1 et 3 mois selon la taille du produit conditionné. Pendant cette longue maturation, le produit subit de nouveau un auto-compactage et voit ainsi sa teneur en matière sèche de nouveau sensiblement augmenter.

La onzième étape 110, la douzième étape 120 et la treizième étape 130 constituent le troisième enchainement d'étapes C pouvant être résumé de la façon suivante :
- maturation courte (étape 110),
- application d'une couche protectrice (étape 120),
- maturation longue (étape 130).

Au terme de la treizième étape 130, le produit longuement maturé forme le produit alimentaire issu de la méthode de fabrication 3 qui, s'il est entreposé dans des conditions réfrigérées, peut être conservée pendant une durée variant de 6 à 12 mois. La teneur en matière sèche, en protéine et le taux en pH du produit alimentaire sont respectivement compris entre 41 et 66%, entre 19 et 21% et entre4,3 et 5,5.

Le tableau ci-dessous donne des exemples de produits alimentaires obtenus par la mise en œuvre de la méthode de fabrication 3 :

| Type d'essai | Résultat Produit RN4828 | Résultat Produit RN4827 | Résultat Produit PN4006 | Résultat Produit PN4005 |
|---|---|---|---|---|
| Teneur en matière sèche (%) | 41.83 | 51,48 | 54,09 | 65,21 |
| PH | 4,32 | 4,43 | 5,46 | 5,08 |
| Consistance | Produit ferme | Produit ferme | Ferme, homogène , à la surface lisse au découpage | Ferme, homogène , à la surface lisse au découpage |
| Goût | Lactique au goût de fromage | Lactique au goût de fromage | Lactique relevé de fromage et pommes de terre | Lactique au goût de fromage |
| Arôme | Lactique à l'arôme d'huile de coco | Lactique à l'arôme d'huile de coco | Lactique à l'arôme d'huile de coco | Lactique à l'arôme d'huile de coco |
| Couleur | Beige clair de l'extérieur, blanc laiteux à l'intérieur | A l'extérieur couleur claire d'huile de coco. | Clair à couleur crème laiteux | Clair à couleur crème laiteux |
| Aspect extérieur | Bloc homogène | Bloc homogène | Surface lisse couverte de matière grasse | Surface lisse couverte de matière grasse |
| Teneur en protéines (%) | 19.15 | 20,96 | - | - |
| Durée de maturation | 48 H - produit frais | 9 semaines | 10 semaines | 16 semaines |

La longue durée de conservation d'un produit alimentaire fabriqué par la méthode selon l'une des mises en œuvre de l'invention peut être vérifiée en effectuant des analyses microbiologiques dudit produit. Le tableau ci-dessous donne des résultats d'analyses pour les exemples des produits alimentaires obtenus par la mise en œuvre de la méthode de fabrication 3 :

| Paramètres microbiologiques (matière sèche 41-66%, PH 4.3-5.5, protéines 19-21%) | | | |
|---|---|---|---|
| PN 4006 : Produit alimentaire ferme de yaourt cuit, maturé pendant 3 mois | | | |
| PN 4005 : Produit alimentaire ferme de yaourt cuit, maturé pendant 2 mois | | | |

| Type de caractéristique testée | Unité de mesure | Résultat | Conditions du test |
|---|---|---|---|
| Salmonelle | ufc/25g | Non détectable | 37.0 +/-0.1°C |
| Listeria monocytogenes | ufc/25g | Non détectable | 37.0 +/-0.1°C |
| Escherichia coli | ufc/g | <1x10^1 | 44.0 +/-0.1°C |
| Staphylocoques à coagulase positive | ufc/g | <1x10^2 | 37.0 +/-0.1°C |

Selon un quatrième mode de réalisation de l'invention, une méthode de fabrication 4 concerne la fabrication d'un produit alimentaire croquant à partir d'un yaourt, le produit alimentaire ayant une durée de conservation comprise entre 6 et 12 mois dans des conditions réfrigérées. Le yaourt Y est par exemple le même que celui du premier mode de réalisation.

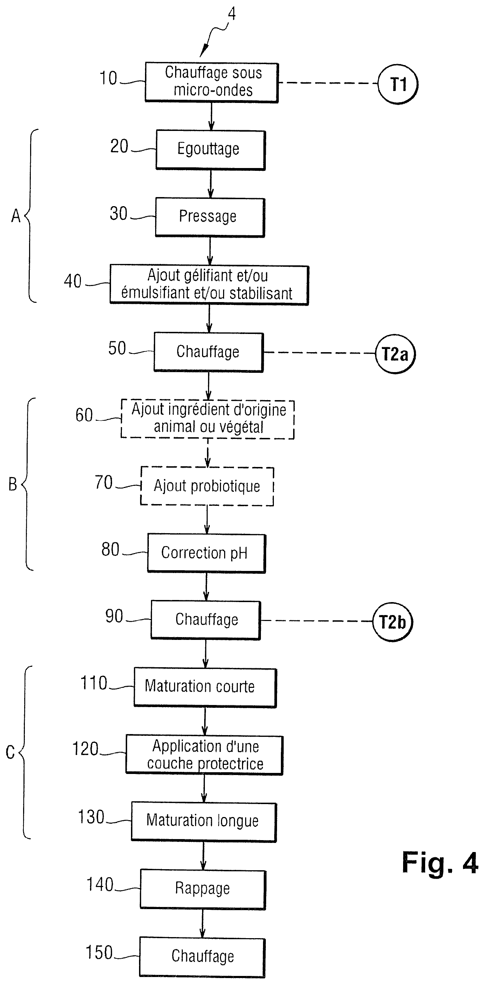

Conformément à la figure 4, la méthode de fabrication 4 consiste à réaliser la totalité des étapes de la méthode de fabrication 3 puis une quatorzième étape 140 et une quinzième étape 150 qui consistent respectivement à râper le produit longuement maturé et à le chauffer à une température comprise entre 65 et 70°C pendant une durée comprise entre 20 et 30 minutes pour obtenir une couleur dorée. Le produit longuement maturé est typiquement râpé en fibres de longueurs comprises entre 1,5 et 2 millimètres, fibres formant une couche d'épaisseur comprise entre 3 et 5 millimètres.

Le tableau ci-dessous donne un exemple de produit alimentaire obtenu par la mise en œuvre de la méthode de fabrication 4 :

| Type d'essai | Résultat Produit PN4143 |
|---|---|
| Teneur en matière sèche (%) | 85,33 |
| PH | 4,42 |
| Consistance | Produit croquant |
| Goût | Goût de fromage relevé de pommes de terre |
| Arôme | Lactique à l'arôme de pommes de terre |
| Couleur | Doré- Echantillon n°8 |
| Aspect extérieur | Brin d'une épaisseur de 1,5-2 mm |
| Teneur en protéines ( % ) | 32,01 |

Selon un cinquième mode de réalisation de l'invention, une méthode de fabrication 5 concerne la fabrication d'un produit alimentaire sous forme de poudre à partir d'un yaourt, le produit alimentaire ayant une durée de conservation comprise entre 6 et 12 mois dans des conditions réfrigérées. Le yaourt Y est par exemple le même que celui du premier mode de réalisation.

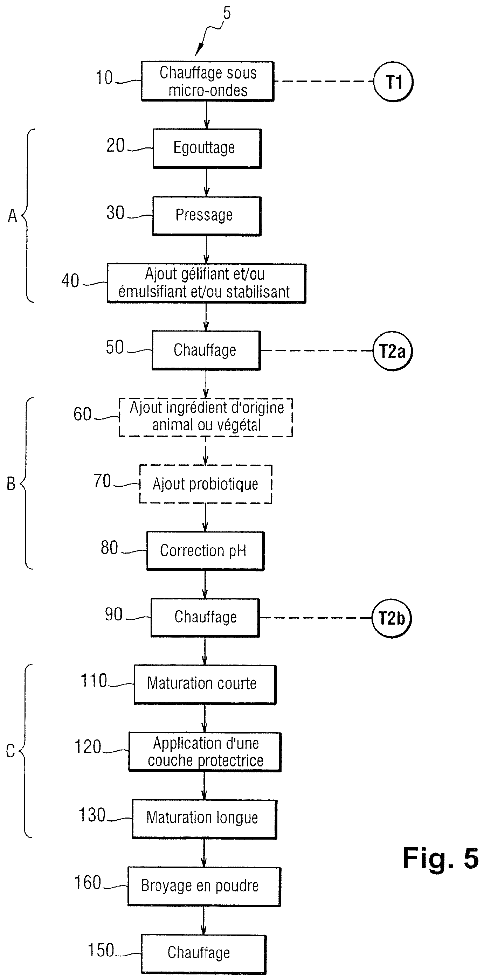

Conformément à la figure 5, la méthode de fabrication 5 est similaire à la méthode de fabrication 4 à la différence que le produit longuement maturé n'est pas râpé mais broyé en poudre lors d'une seizième étape 160 avant d'être chauffé pour obtenir une couleur dorée.

Le tableau ci-dessous donne un exemple de produit alimentaire obtenu par la mise en œuvre de la méthode de fabrication 5 :

| Type d'essai | Résultat Produit RN4826 |
|---|---|
| Teneur en matière sèche (%) | 91,74 |
| PH | 3,31 |
| Consistance | Consistance de farine |
| Goût | Lactique au goût de fromage |
| Arôme | Lactique |
| Couleur | Blanc |
| Aspect extérieur | Produit en poudre |
| Teneur en protéines (%) | 40,79 |

On a ainsi vu qu'à partir d'un même produit de base (le yaourt Y), on a pu fabriquer de nombreux produits alimentaires différents.

L'ensemble des modes de réalisation précédemment décrit comprennent le premier traitement thermique, le premier enchainement d'étape A et au moins l'un du deuxième traitement thermique et du troisième traitement thermique.

Bien entendu, l'invention n'est pas limitée aux modes de réalisation décrits mais englobe toute variante entrant dans le champ de l'invention telle que définie par les revendications.

On pourra ainsi utiliser le sérum lactique issu de l'égouttage et du pressage du yaourt pour fabriquer d'autres produits alimentaires.

La pectine pourra par exemple être de la pectine de pommes dissoute dans un extrait aqueux de condiments.

## Revendications

1. Méthode de fabrication de produits alimentaires à partir d'un yaourt,
ledit yaourt comprenant un coagulum de consistance ferme, un taux de lipide sensiblement égal à 2%, un taux de protéine compris entre 3,2 et 3,3%, un taux de matière sèche compris entre 9,5 et 10% et un niveau de pH compris entre 4 et 4,8,
et la méthode comprenant les étapes suivantes :
- a) chauffer le yaourt sous micro-ondes à une fréquence comprise entre 915 et 2375 mégahertz et à une température comprise entre 60 et 65 degrés Celsius pendant 10 à 15 secondes (10, T1),
- b) égoutter le yaourt chauffé par micro-ondes pendant une durée comprise entre 12 et 18 heures et à une température comprise entre 2 et 6°C (20),
- c) presser le yaourt égoutté pendant une durée comprise entre 12 et 18 heures et à une température comprise entre 2 et 6°C (30),
- d) ajouter au yaourt pressé au moins un ingrédient comprenant un extrait aqueux de condiments à effets conservateurs et de la pectine soluble dans l'extrait aqueux de condiments à effets conservateurs, le rapport volume de pectine sur volume d'extrait aqueux étant sensiblement égal à 0.1 (40), et
la méthode comprenant aussi au moins l'une des deux étapes suivantes :
- e) chauffer le yaourt pressé et additionné à une température comprise entre 65 et 70 degrés Celsius jusqu'à l'obtention d'une teneur en matière sèche sensiblement supérieure à 30% (50, T2a), puis à une température comprise entre 79 et 81 degrés Celsius pendant 88 à 92 secondes pour ensuite revenir à une température comprise entre 65 et 70 degrés Celsius jusqu'à l'obtention d'un produit donné ayant une teneur en matière sèche comprise entre 30% et 44.5% (90, T2b),
- f) chauffer le yaourt pressé et additionné à une température comprise entre 90 et 95 degrés Celsius pendant 30 à 40 minutes et le refroidir jusqu'à entre 9 et 11 degrés Celsius en moins de 60 minutes (T3, 100),
et la méthode comprenant en outre l'étape suivante :
- g) corriger le niveau de pH du yaourt pressé et additionné par ajout de bicarbonate de sodium et/ou de bicarbonate de potassium pour obtenir un niveau de pH supérieur à 5, et en particulier compris entre 5 et 5,8 (80), cette correction ayant lieu au cours de l'étape e) ou avant l'étape f) lorsque l'étape e) n'a pas lieu.

2. Méthode de fabrication selon la revendication 1, comprenant une étape d'ajout d'ingrédients d'origine animale ou végétale (60).

3. Méthode de fabrication selon l'une quelconque des revendications précédentes, comprenant une étape d'ajout de probiotiques (70).

4. Méthode de fabrication selon l'une quelconque des revendications précédentes, comprenant une première étape de maturation du produit issu de l'étape f) (110) à une température comprise entre 2 et 6 degrés Celsius pendant une durée comprise entre 24 et 48 heures, une étape d'application sur le produit maturé d'une couche protectrice contre la contamination superficielle (120), puis une deuxième étape de maturation du produit recouvert de sa couche protectrice à une température comprise entre 2 et 6 degrés Celsius pendant 1 à 3 mois (130).

5. Méthode de fabrication selon la revendication 4, comprenant une étape de râpage ou de réduction en poudre du produit maturé pour obtenir un produit râpé ou réduit en poudre (140).

6. Méthode de fabrication selon la revendication 5, comprenant une étape de chauffage du produit râpé ou réduit en poudre à une température comprise entre 65 et 70 degrés Celsius pendant 20 à 30 minutes (150).

## Patentansprüche

1. Verfahren zur Herstellung von Lebensmittelprodukten aus einem Joghurt,
wobei der Joghurt ein Koagulum mit fester Konsistenz, einen Fettgehalt von im Wesentlichen 2 %, einen Proteingehalt von 3,2 bis 3,3 %, einen Trockensubstanzgehalt von 9,5 bis 10 % und einen pH-Wert von 4 bis 4,8 umfasst,
und wobei das Verfahren die Schritte umfasst, dass:
- a) der Joghurt durch Mikrowellen mit einer Frequenz von 915 bis 2375 Megahertz und einer Temperatur von 60 bis 65 Grad Celsius 10 bis 15 Sekunden lang erwärmt wird (10, T1),
- b) der durch Mikrowellen erwärmte Joghurt während einer Dauer von 12 bis 18 Stunden bei einer Temperatur von 2 bis 6 °C abtropfen gelassen wird (20),
- c) der abgetropfte Joghurt während einer Dauer von 12 bis 18 Stunden bei einer Temperatur von 2 bis 6 °C gepresst wird (30),
- d) der gepresste Joghurt mit zumindest einer Zutat angereichert wird, die einen wässrigen Gewürzextrakt mit konservierenden Eigenschaften sowie in dem wässrigen Gewürzextrakt mit konservierenden Eigenschaften lösliches Pektin umfasst, wobei das Verhältnis von Pektinvolumen zu wässrigem Extraktvolumen im Wesentlichen 0,1 beträgt (40), und
wobei das Verfahren außerdem zumindest einen der folgenden beiden Schritte umfasst, nämlich dass:
- e) der gepresste und angereicherte Joghurt so lange mit einer Temperatur von 65 bis 70 Grad Celsius erwärmt wird, bis ein Trockensubstanzgehalt von deutlich mehr als 30 % gewonnen ist (50, T2a), der Joghurt dann 88 bis 92 Sekunden lang mit einer Temperatur von 79 bis 81 Grad Celsius weiter erwärmt wird und anschließend wieder auf eine Temperatur von 65 bis 70 Grad Celsius zurückgeführt und so lange auf dieser gehalten wird, bis ein bestimmtes Produkt mit einem Trockensubstanzgehalt von 30 % bis 44,5 % gewonnen ist (90, T2b),
- f) der gepresste und angereicherte Joghurt 30 bis 40 Minuten lang mit einer Temperatur von 90 bis 95 Grad Celsius erwärmt wird und anschließend innerhalb von weniger als 60 Minuten auf 9 bis 11 Grad Celsius abgekühlt wird (T3, 100),
und wobei das Verfahren ferner den Schritt umfasst, dass:
- g) der pH-Wert des gepressten und angereicherten Joghurts durch Zugabe von Natriumbicarbonat und/oder Kaliumbicarbonat korrigiert wird, um einen pH-Wert größer als 5, insbesondere zwischen 5 und 5,8, zu erhalten (80), wobei die Korrektur während des Schritts e) oder, wenn der Schritt (e) entfällt, vor dem Schritt f) durchgeführt wird.

2. Herstellungsverfahren nach Anspruch 1, umfassend einen Schritt, bei welchem Zutaten tierischen oder pflanzlichen Ursprungs hinzugefügt werden (60).

3. Herstellungsverfahren nach einem der vorhergehenden Ansprüche, umfassend einen Schritt, bei welchem Probiotika hinzugefügt werden (70).

4. Herstellungsverfahren nach einem der vorhergehenden Ansprüche, umfassend eine erste Reifephase, bei welcher das Produkt aus Schritt f) bei einer Temperatur von 2 bis 6 Grad Celsius während einer Dauer von 24 bis 48 Stunden gereift wird (110), einen Schritt, bei welchem auf dem gereiften Produkt eine Schutzschicht gegen Oberflächenkontamination aufgebracht wird (120), und anschließend eine zweite Reifephase, bei welcher das mit der Schutzschicht überzogene gereifte Produkt bei einer Temperatur von 2 bis 6 Grad Celsius 1 bis 3 Monate lang gereift wird (130).

5. Herstellungsverfahren nach Anspruch 4, umfassend einen Schritt, bei welchem das gereifte Produkt gerieben oder zu Pulver verarbeitet wird, um ein Produkt in geriebener Form oder Pulverform zu erhalten (140).

6. Herstellungsverfahren nach Anspruch 5, umfassend einen Schritt, bei welchem das Produkt in geriebener Form oder Pulverform 20 bis 30 Minuten lang mit einer Temperatur von 65 bis 70 Grad Celsius erwärmt wird (150).

## Claims

1. Method of manufacturing food products from a yoghurt, said yoghurt comprising a coagulum of firm consistency, a lipid content substantially equal to 2%, a protein content of between 3.2 and 3.3%, a dry matter content of between 9.5 and 10% and a pH level of between 4 and 4.8,
and the method comprising the following steps:
- a) heat the yogurt in a microwave at a frequency between 915 and 2375 megahertz and at a temperature between 60 and 65 degrees Celsius for 10 to 15 seconds (10, T1),
- b) drain the yogurt heated in the microwave for a period of between 12 and 18 hours and at a temperature of between 2 and 6°C (20),
- c) press the drained yogurt for a period of between 12 and 18 hours and at a temperature of between 2 and 6°C (30),
- d) add to the pressed yogurt at least one ingredient comprising an aqueous extract of condiments with preservative effects and pectin soluble in the aqueous extract of condiments with preservative effects, the ratio of volume of pectin to volume of aqueous extract being substantially equal to 0.1 (40), and
the method also includes at least one of the following two steps:
- e) heating the pressed and added yoghurt to a temperature of between 65 and 70 degrees Celsius until a dry matter content of substantially greater than 30% is obtained (50, T2a), then to a temperature of between 79 and 81 degrees Celsius for 88 to 92 seconds and then returning to a temperature of between 65 and 70 degrees Celsius until a given product having a dry matter content of between 30% and 44.5% is obtained (90, T2b),
- f) heat the pressed and added yogurt to a temperature between 90 and 95 degrees Celsius for 30 to 40 minutes and cool it to between 9 and 11 degrees Celsius in less than 60 minutes (T3, 100),
and the method further comprising the following step:
- g) correct the pH level of the pressed and added yogurt by adding sodium bicarbonate and/or potassium bicarbonate to obtain a pH level greater than 5, and in particular between 5 and 5.8 (80), this correction taking place during step e) or before step f) when step e) does not take place.

2. Method of manufacture according to claim 1, comprising a step for adding ingredients of animal or plant origin (60).

3. Method of manufacture according to any one of the preceding claims, comprising a step for adding probiotics (70) .

4. Method of manufacture according to any one of the preceding claims, comprising a first step of maturing the product resulting from step f) (110) at a temperature of between 2 and 6 degrees Celsius for a period of between 24 and 48 hours, a step of applying to the matured product a protective layer against surface contamination (120), then a second step of maturing the product covered with its protective layer at a temperature of between 2 and 6 degrees Celsius for 1 to 3 months (130).

5. Method of manufacture according to claim 4, comprising a step of grating or powdering the matured product to obtain a grated or powdered product (140).

6. Method of manufacture according to claim 5, comprising a step of heating the grated or powdered product to a temperature between 65 and 70 degrees Celsius for 20 to 30 minutes (150).
